(19) **Europäisches Patentamt / European Patent Office / Office européen des brevets**

(11) **EP 2 323 081 A1**

(12) **EUROPEAN PATENT APPLICATION**
published in accordance with Art. 153(4) EPC

(43) Date of publication:
**18.05.2011 Bulletin 2011/20**

(21) Application number: **08792228.2**

(22) Date of filing: **05.08.2008**

(51) Int Cl.:
**G06N 5/04** (2006.01)  **C40B 30/02** (2006.01)
**G06Q 10/00** (2006.01)

(86) International application number:
**PCT/JP2008/064061**

(87) International publication number:
**WO 2010/016110 (11.02.2010 Gazette 2010/06)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Fujitsu Limited**
**Kawasaki-shi, Kanagawa 211-8588 (JP)**

(72) Inventor: **YUTA, Kohtarou**
**Narashino-shi, Chiba 275-0025 (JP)**

(74) Representative: **Stebbing, Timothy Charles**
**Haseltine Lake LLP**
**Lincoln House, 5th Floor**
**300 High Holborn**
**London WC1V 7JH (GB)**

(54) **METHOD OF CREATING ESTIMATION MODEL BY MEANS OF MULTIPLE REGRESSION ANALYSIS, CREATION SYSTEM AND CREATION PROGRAM**

(57)   A prediction model having high prediction accuracy for the prediction of a dependent variable is generated based on multiple regression analysis. The method includes: a) constructing an initial sample set from samples for each of which the measured value of the dependent variable is known; b) generating a multiple regression equation by performing multiple regression analysis on the sample set; c) calculating a residual value for each sample based on the multiple regression equation; d) identifying, based on the residual value, a sample that fits the multiple regression equation; e) constructing a new sample set by removing the identified sample from the initial sample set; and f) replacing the initial sample set by the new sample set, and repeating from a) to e), thereby generating a plurality of multiple regression equations and identifying a sample to which the multiple regression equation is applied.

FIG.6

```
START
CONSTRUCT TRAINING SAMPLE SET                                    S1
GENERATE INITIAL PARAMETERS FOR EACH TRAINING SAMPLE             S2
STAGE=1                                                          S3
PERFORM FEATURE EXTRACTION USING INITIAL PARAMETERS             S4
DETERMINE FINAL PARAMETER SET                                   S5
GENERATE MULTIPLE REGRESSION EQUATION                          S6
CALCULATE PREDICTED VALUE OF EACH TRAINING SAMPLE              S7
CALCULATE RESIDUAL VALUE OF EACH TRAINING SAMPLE               S8
EXTRACT TRAINING SAMPLES HAVING SMALL RESIDUAL VALUES          S9
SET MULTIPLE REGRESSION EQUATION AND EXTRACTED TRAINING SAMPLES AS
PREDICTION MODEL FOR CURRENT STAGE                             S10
IS ANALYSIS TERMINATION CONDITION SATISFIED ?    S11   NO
YES                                              S12
CONSTRUCT NEW TRAINING SAMPLE SET USING REMAINING TRAINING SAMPLES
STAGE=STAGE+1                                    S13    S14   END
```

EP 2 323 081 A1

**Description**

FIELD

The present invention relates to a method, system, and program for generating a prediction model for predicting, using a fitting technique, a physical, chemical, or physiological property of a sample when the data relating to the property is a continuous quantity.

BACKGROUND

A commonly practiced method for analyzing data whose dependent variable is a continuous variable involves a fitting problem. There are two major approaches to the fitting problem: one is linear fitting and the other is nonlinear fitting. One typical technique of linear fitting is a multiple linear regression analysis technique, and one typical technique of nonlinear fitting is a multiple nonlinear regression analysis technique. Nonlinear fitting techniques today include a PLS (Partial Least Squares) method, a neural network method, etc., and are capable of fitting on a curve having a very complex shape.

The prediction reliability for an unknown sample, i.e., a sample whose dependent variable is unknown, depends on the goodness of fit of the multiple regression equation calculated using a linear or nonlinear fitting technique. The appropriate fit of the multiple regression equation is measured by the value of a correlation coefficient R or a coefficient of determination R2. The closer the value is to 1, the better the regression equation, and the closer the value is to 0, the worse the regression equation.

The correlation coefficient R or the coefficient of determination R2 is calculated based on the difference between the actual value of the dependent variable of a given sample and the predicted value calculated using a multiple linear or nonlinear regression equation (prediction model) generated for the purpose. Accordingly, the correlation coefficient R or the coefficient of determination R2 equal to 1 means that the actual value of the dependent variable of that sample exactly matches the predicted value of the dependent variable calculated by the prediction model.

In normal analysis, it is rare that the correlation coefficient R or the coefficient of determination R2 becomes 1. In many fields of analysis, the target is to achieve a correlation coefficient R of about 0.9 (90%). However, in the field of analysis related to chemical compounds (structure-activity relationships, structure-ADME relationships, structure-toxicity relationships, structure-property relationships, structure-spectrum relationships, etc.), it is difficult to achieve such a high coefficient value. This is primarily because the variation in structure among chemical compound samples is large and the number of samples used in the data analysis is also large.

On the other hand, when performing data analysis or data prediction about factors that may have detrimental effects on human bodies, as in the safety evaluation of chemical compounds, if the value of the correlation coefficient R or the coefficient of determination R2 is low, the results of such data analysis do not serve for practical purposes. If the value of the correlation coefficient R or the coefficient of determination R2 is low, the prediction rate significantly drops. In safety evaluation, an erroneous prediction can lead to a fatal result. For example, if a compound having inherently high toxicity is erroneously predicted to have low toxicity, it will have a serious impact on society. For such reasons, the safety evaluation of chemical compounds based on multivariate analysis or pattern recognition is not suitable for practical use at the present state of the art.

In recent years, a regulation referred to as REACH has entered into force in the EU and, in view of this and from the standpoint of animal welfare, the trend is toward banning the use of animals in toxicity experiments of chemical compounds. For example, in the EU, the use of animals in skin sensitization and skin toxicity tests is expected to be banded starting from 2010. Accordingly, data analysis based on multivariate analysis or pattern recognition that can evaluate large quantities of chemical compounds at high speed without using laboratory animals has been attracting attention. In view of this, there is a need for a novel linear or nonlinear multiple regression analysis technique that can achieve a high correlation coefficient value R or a high coefficient of determination value R2, irrespective of how large the sample variety or the sample size is.

Many instances of chemical toxicity and pharmacological activity predictions using multiple linear or nonlinear regression analyses have been reported up to date (for example, refer to non-patent documents 1 and 2).

However, there have been proposed two approaches as techniques for improving the correlation coefficient value R or the coefficient of determination value R2. The first approach aims to improve the correlation coefficient value R or the coefficient of determination value R2 by changing the parameters (in this case, explanatory variables) used in the data analysis. The second approach is to remove from the entire training sample set so-called outlier samples, i.e, the samples that can cause the correlation coefficient value R or the coefficient of determination value R2 to drop significantly. The sample, set constructed from the remaining training samples consists only of good samples, and as a result, the correlation coefficient value R or the coefficient of determination value R2 improves.

As another approach, it may be possible to improve the correlation coefficient value R or the coefficient of determination value R2 by applying a more powerful nonlinear data analysis technique. However, in this case, another problem of data analysis, called "over fitting", occurs and, while the data analysis accuracy (the correlation coefficient value R or the coefficient of determination value R2) improves, the reliability of the data analysis itself degrades, and this seriously affects the most important predictability. It is therefore not preferable to use a powerful nonlinear data analysis technique.

Feature extraction is performed to determine the kinds of parameters to be used in analysis. Accordingly, when performing the analysis by using the final parameter set after the feature extraction, the only method available at the moment to improve the correlation coefficient value R or the coefficient of determination value R2 is the second approach described above, i.e., the method in which a new training sample set is constructed by removing the outlier samples from the initial training sample set and the multiple regression analysis is repeated using the new sample set. In this method, since the samples (outlier samples) located far away from the regression line are removed, the correlation coefficient value R or the coefficient of determination value R2 necessarily improves.

However, if the outlier samples are removed without limitation, trying to improve the correlation coefficient value R or the coefficient of determination value R2, such coefficient values improve, but since the total number of samples decreases, the reliability and versatility of the data analysis as a whole degrade, resulting in predictability significantly dropping, In data analysis, the general rule is that the number of samples to be removed from the initial sample population is held to within 10% of the total number of samples. Therefore, if the correlation coefficient value R or the coefficient of determination value R2 does not improve after removing this number of samples, it means that the data analysis has failed. Furthermore, removing the samples in this way, if limited in number to 10% of the total number, means ignoring the information that such samples have; therefore, even if the correlation coefficient value R or the coefficient of determination value R2 has been improved, the data analysis as a whole cannot be expected to yield adequate results. Ideally, it is desirable to improve the correlation coefficient value R or the coefficient of determination value R2 without removing any samples.

Non-patent document 1: Tomohisa Nagamatsu et al., "Antitumor activity molecular design of flavin and 5-deazaflavin analogs and auto dock study of PTK inhibitors," Proceedings of the 25th Medicinal Chemistry Symposium, 1P-20, pp. 82-83, Nagoya (2006)

Non-patent document 2: Akiko Baba et al., "Structure-activity relationships for the electrophilic reactivities of 1-β-O-Acryl glucuronides," Proceedings of the 34th Structure-Activity Relationships Symposium, KP20, pp. 123-126, Niigata (2006)

SUMMARY

Problem to be Solved by the Invention

Accordingly, an object of the invention is to provide a prediction model generation method, system, and program that can generate a prediction model having high prediction accuracy by performing multiple regression analysis that yields high correlation without losing information each individual training sample has, even when the variety among training samples is large and the number of samples is also large.

A method that achieves the above object comprises: a) constructing an initial sample set from samples for each of which a measured value of a dependent variable is known; b) generating a multiple regression equation by performing multiple regression analysis on the initial sample set; c) calculating a residual value for each of the samples on the basis of the multiple regression equation; d) identifying, based on the residual value, a sample that fits the multiple regression equation; e) constructing a new sample set by removing the identified sample from the initial sample set; f) replacing the initial sample set by the new sample set, and repeating from a) to e); and g) generating, from a combination of the multiple regression equation generated during each iteration of the repeating and the sample to be removed, a prediction model for a sample for which the dependent variable is unknown.

In the above method, a predetermined number of samples taken in increasing order of the residual value may be identified in d) as samples to be removed.

Alternatively, any sample having a residual value not larger than a predetermined threshold value may be identified in d) as a sample to be removed.

In the above method, the repeating in f) may be stopped when one of the following conditions is detected in the new sample set: the total number of samples has become equal to or smaller than a predetermined number; the smallest of the residual values of the samples has exceeded a predetermined value; the ratio of the number of samples to the number of parameters to be used in the multiple regression analysis has become equal to or smaller than a predetermined value; and the number of times of the repeating has exceeded a predetermined number.

The above method may further include: preparing a sample for which the dependent variable is unknown; and identifying from among the initial sample set a sample having the highest degree of structural similarity to the unknown sample, and the repeating in f) may be stopped when the sample having the highest degree of structural similarity is included in the samples to be removed.

In the above method, the predicted value of the dependent variable of each individual training sample can be calculated using a multiple regression equation generated by performing multiple regression analysis on a training sample set (initial sample set) constructed from samples whose dependent variable values are known. Then, the difference between the measured value and the predicted value of the dependent variable, i.e., the residual value, is obtained for each training sample. This indicates how well the generated multiple regression equation fits the measured value of the dependent variable of each training sample. For example, if the residual value is 0, the predicted value of the dependent variable of the training sample exactly matches the measured value, meaning that the prediction is accurate. The larger the prediction value, the less accurate the prediction made by the multiple regression equation.

Therefore, any training samples that fits the generated multiple regression equation is identified based on its residual value, and the generated multiple regression equation is set as the prediction model to be applied to such samples. At the same time, any training sample that fits the multiple regression equation is removed from the initial sample set, and a new training sample set is constructed using the remaining training samples; then, by performing multiple regression analysis once again, a new multiple regression equation suitable for the new training sample set is generated. Using this new multiple regression equation, the residual values of the training samples are calculated, and any training sample that fits the new multiple regression equation is identified. The new multiple regression equation is set as the prediction model to be applied to such identified training samples.

By repeating the above process, a plurality of multiple regression equations can be obtained, and one or a plurality of training samples to which each multiple regression equation is to be applied can be identified. That is, the initial sample set is decomposed into at least as many sub-sample sets as the number of multiple regression equations, and a specific multiple regression equation having a high degree of correlation is allocated to each sub-sample set. The sub-sample sets corresponding to the respective multiple regression equations constitute the entire prediction model formed from the initial sample set. Unlike the prior art method that removes outlier samples, the approach of the present invention does not remove any sample itself, and therefore, the present invention can generate a group of prediction models having high prediction accuracy without losing information relating to the dependent variable that each individual training sample in the initial sample set has.

When making a prediction on a sample whose dependent variable value is unknown by using the thus generated prediction model, a training sample most similar in structure to the unknown sample is identified from among the initial sample set, and the dependent variable of the unknown sample is calculated by using the multiple regression equation allocated to the sub-sample set to which the identified training sample belongs. A highly reliable prediction can thus be achieved.

A program that achieves the above object causes a computer to execute: a) constructing an initial sample set from samples for each of which a measured value of a dependent variable is known; b) generating a multiple regression equation by performing multiple regression analysis on the initial sample set; c) calculating a residual value for each of the samples on the basis of the multiple regression equation; d) identifying, based on the residual value, a sample that fits the multiple regression equation; e) constructing a new sample set by removing the identified sample from the initial sample set; f) replacing the initial sample set by the new sample set, and repeating from a) to e); and g) generating, from a combination of the multiple regression equation generated during each iteration of the repeating and the sample to be removed, a prediction model for a sample for which the dependent variable is unknown.

A system that achieve the above object comprises: first means for constructing an initial sample set from samples for each of which a measured value of a dependent variable is known; second means for generating a multiple regression equation by performing multiple regression analysis on the initial sample set; third means for calculating a residual value for each of the samples on the basis of the multiple regression equation; fourth means for identifying, based on the residual value, a sample that fits the multiple regression equation; fifth means for constructing a new sample set by removing the identified sample from the initial sample set; sixth means for replacing the initial sample set by the new sample set, and for repeating from a) to e); and seventh means for causing the sixth means to stop the repeating when one of the following conditions is detected in the new sample set: the total number of samples has become equal to or smaller than a predetermined number; the smallest of the residual values of the samples has exceeded a predetermined value; the ratio of the number of samples to the number of parameters to be used in the multiple regression analysis has become equal to or smaller than a predetermined value; and the number of times of the repeating has exceeded a predetermined number.

EFFECT OF THE INVENTION

According to the method, program, and system described above, a group of prediction models having high prediction accuracy can be generated from the initial sample set without losing any information that each individual training sample contained in the initial sample set has. The present invention can therefore be applied to the field of safety evaluation of chemical compounds that requires high prediction accuracy.

BRIEF DESCRIPTION OF THE DRAWINGS

FIG. 1 is a correlation diagram explaining the principles of the present invention, illustrating the relationship of the measured values of samples versus their calculated values obtained by multiple regression analysis.

FIG. 2 is a diagram explaining a region of small residual values in the correlation diagram of FIG. 1.

FIG. 3 is a correlation diagram illustrating the results obtained by performing multiple regression analysis on a new training sample set.

FIG. 4 is a correlation diagram illustrating the results obtained by performing multiple regression analysis on a further new training sample set.

FIG. 5 is a correlation diagram illustrating the results obtained by performing multiple regression analysis on a still further new training sample set.

FIG. 6 is a flowchart illustrating a processing procedure according to a first embodiment.

FIG. 7 is a diagram illustrating one example of an initial parameter set table.

FIG. 8 is a graphical representation of the results of the multiple regression analysis performed in a first stage.

FIG. 9 is a graphical representation of the results of the multiple regression analysis performed in a second stage.

FIG. 10 is a graphical representation of the results of the multiple regression analysis performed in a stage near the final stage.

FIG. 11 is a diagram illustrating some of the multiple regression analysis results obtained in accordance with the first embodiment.

FIG. 12 is a flowchart illustrating a procedure for predicting a dependent variable for an unknown sample by using a prediction model generated in accordance with the first embodiment.

FIG. 13A is a flowchart illustrating the first half of a procedure for implementing a second embodiment.

FIG. 13B is a flowchart that is a continuation of the flowchart of FIG. 13A.

FIG. 14 is a block diagram illustrating the general configuration of a prediction model generation system according to a third embodiment.

DESCRIPTION OF REFERENCE NUMERALS

| | |
|---|---|
| 1, 2, 3, 4 | samples with small residual values |
| 5, 6 | samples with large residual values |
| 10, 20 | regions containing samples with small residual values |
| 200 | prediction model generation apparatus |
| 210 | input device |
| 220 | output device |
| 300 | storage device |
| 400 | analyzing unit |
| M1, M2, M3, Mn | regression lines |

DESCRIPTION OF EMBODIMENTS

[Principles of the Invention]

Before describing the embodiments of the present invention, the principles of the present invention will be described first.

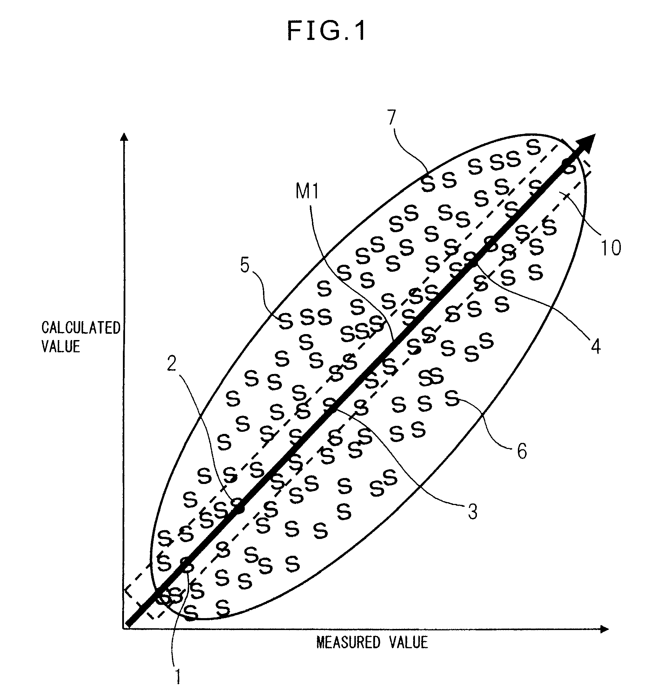

FIG. 1 illustrates the results obtained by performing multiple linear regression analysis on a certain training sample set. The figure depicts the correlation between the measured and the calculated values (calculated using a generated prediction model) of the dependent variable of the training samples. The abscissa represents the value of the dependent variable measured for each sample, and the ordinate represents the value (calculated value) of the dependent variable $Y1$ calculated for each sample by using a multiple regression equation (prediction model M1) obtained as a result of the multiple regression analysis. The multiple regression equation in this case is expressed by the following equation (1).

Multiple regression equation (M1):

$$M1 = \pm a1 \cdot x1 \pm a2 \cdot x2 \pm ... \pm an \cdot xn \pm C1 \qquad (1)$$

In equation (1), M1 indicates the calculated value of the dependent variable of a given sample, and x1 x2, ..., xn indicate the values of the explanatory variables (parameters); on the other hand, a1, a2, ..., an are coefficients, and C1 is a constant. By substituting the values of the explanatory variables into the above equation (1) for a given sample, the value of the dependent variable Y of that sample is calculated. When the value of the dependent variable M1 calculated by the equation (1) coincides with the measured value of the sample, the sample S lies on the regression line M1 drawn in FIG. 1. Accordingly, it can be said that the closer the samples cluster to the regression line Y, the higher the goodness of fit (accuracy) of the regression equation. As earlier noted, the accuracy of the multiple regression equation is determined by the correlation coefficient R or the coefficient of determination R2. If the correlation coefficient R equals 1, all the samples lie on the regression line. FIG. 1 illustrates the case where the correlation coefficient R is 0.7.

In the multiple linear regression analysis illustrated in FIG. 1, while the correlation coefficient R calculated based on the analysis of the entire sample set is 0.7, it is seen that samples 1, 2, 3, and 4 lie on the regression line M1; therefore, it can be considered that these samples ideally fit the multiple regression equation M1 Stated another way, if the dependent variables of these samples are unknown, then when the dependent variables of the samples 1, 2, 3, and 4 are calculated by using the multiple regression equation M1 as a prediction model, the calculated values (predicted values) almost exactly match the measured values of the dependent variables, which depicts that accurate predictions have been made. On the other hand, for samples 5, 6, 7, etc., the calculated value of the dependent variable departs widely from the measured value, which means that the multiple regression equation M1 cannot make accurate predictions about these samples. In this way, even when the correlation coefficient R is 0.7, the adequateness fit of the multiple regression equation M1 varies from sample to sample.

Another metric that may be used to measure the reliability of the multiple regression equation M1 is the total residual value. The residual value is a value representing an error between the measured and the calculated value of the dependent variable of each sample, and the total residual value is the sum of the residual values of all the samples. For the sample 1 which fits the multiple regression equation M1 well, the residual value is 0 because the calculated value is identical with the measured value. For the sample 7 which does not fit the multiple regression equation M1 well, the residual value is large. Accordingly, the closer the total residual value is to 0, the higher the reliability of the multiple regression equation M1.

The total residual value can be used to evaluate the reliability of the multiple regression equation M1 for the entire sample population, but it cannot be used to evaluate the reliability of the multiple regression equation M1 for each individual sample. For example, for the sample 1, the multiple regression equation M1 fits well, but for the sample 7, its does not fit well. In this way, information relating to the residual value of each individual sample is not reflected in the total residual value.

In the present invention, attention has been focused on the improvement of the residual value of each individual sample, and a novel technique such as described below has been developed after conducting a study on how the residual value of each individual sample can be reduced.

In FIG. 1, the residual values of the samples located near the straight line representing the multiple regression equation M1 are small. Accordingly, if a threshold value α, (absolute value) close to 0 is provided for the residual value, it becomes possible to identify a sample that fits the multiple regression equation M1 well. The threshold value α may be arbitrarily chosen, but as the value is set closer to 0, the accuracy increases. In the correlation diagram of FIG. 1, a region 1 enclosed by dashed lines is a region that contains samples each having a residual value not larger than the threshold value α. Therefore, the multiple regression equation M1 is specified as the prediction model (the prediction model for a first stage) to be applied to the samples each having a residual value not larger than α.

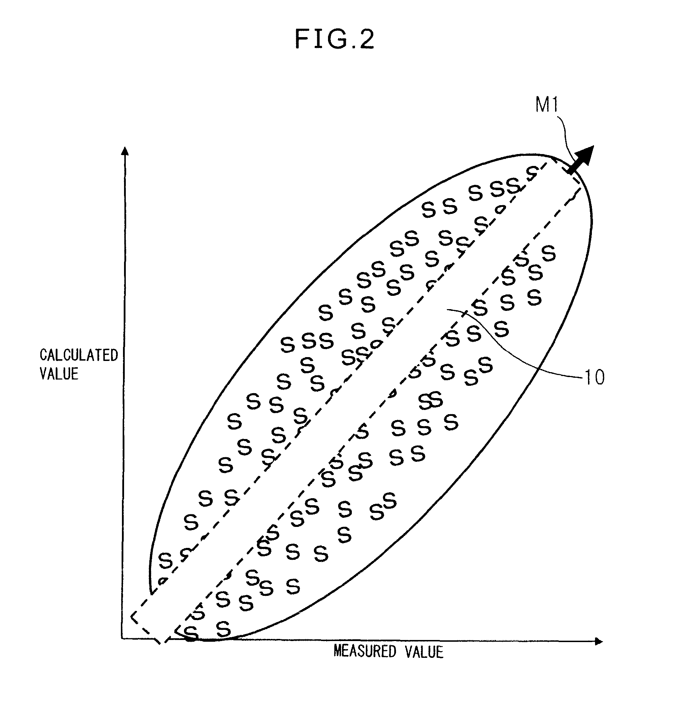

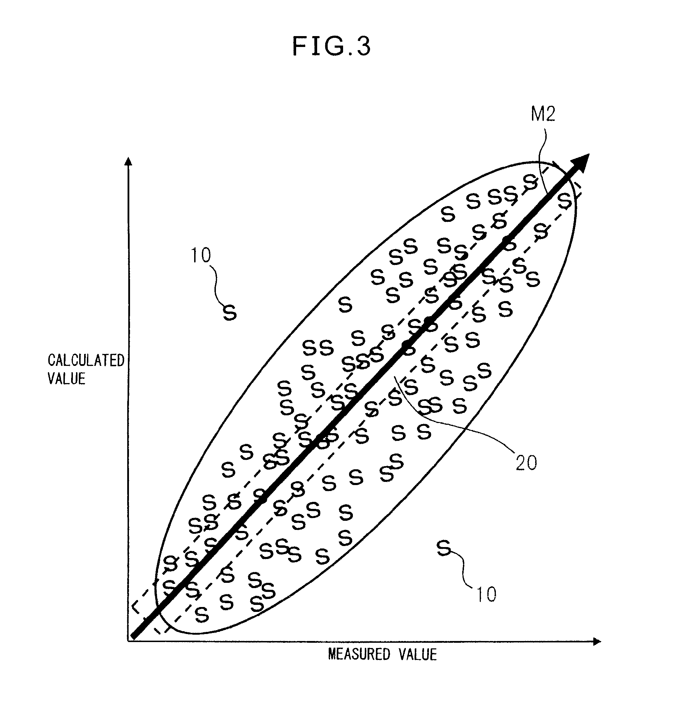

Next, as depicted in FIG. 2, the samples contained in the region 10 are removed from the sample population (hereinafter called the sample set), and a new sample set is constructed from the remaining samples; then, a second multiple regression analysis is performed on this new sample set. In this case, since the new sample set is constructed, new feature extraction is performed to generate a new parameter set, and as a result, a new multiple regression equation M2 (see FIG. 3) is generated.

FIG. 3 is a diagram illustrating the correlation between the measured and the calculated values of the samples, obtained by using the multiple regression equation M2 generated for the new sample set. Since the samples that fit the multiple regression equation M1 well have been removed, some of the samples located far away from the regression line formed by the multiple regression equation M1 now fall into the region near the regression line formed by the new multiple regression equation M2, as can be seen in FIG. 3. As a result, for the samples located near the multiple regression line M2, the error between the measured and the calculated value (predicted value) is small, and thus the multiple regression equation M2 provides a prediction model (the prediction model for a second stage) having high accuracy for these samples. In FIG. 3, samples indicated by 10 are outlier samples generated as a result of the second multiple regression analysis.

To identify the samples to which the prediction model for the second stage is to be applied, a threshold value β (absolute value) is set for the residual value. Here, the threshold value β may be set the same as or different from the threshold value α. In FIG. 3, a region 20 enclosed by dashed lines is a region that contains samples each having a residual value not larger than β. When the prediction model M2 for the second stage and the samples to which this model is to be applied are thus determined, these samples are removed from the sample set, and a new sample set is constructed, as in the first stage.

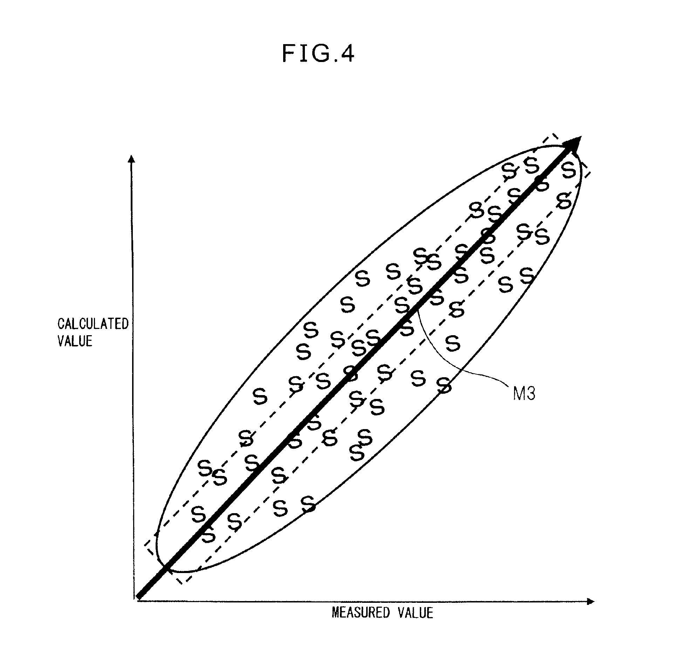

FIG. 4 is a diagram illustrating the correlation between the measured and the calculated values of the samples, obtained by using a new multiple regression equation M3 generated by performing a new multiple regression analysis on the new sample set constructed as described above. As can be seen, new samples fall into the region near the multiple regression line M3. Then, as in the first and second stages, a threshold value γ (absolute value) is set for the residual value, and samples each having a residual value not larger than γ (samples contained in a region 30) are identified as the samples to which the prediction model M3 for the third stage is to be applied. The threshold value γ may be set the same as or different from the threshold value α or β. As depicted in FIG. 4, the outlier samples generated as a result of the second multiple regression analysis are annihilated as a result of the third multiple regression analysis.

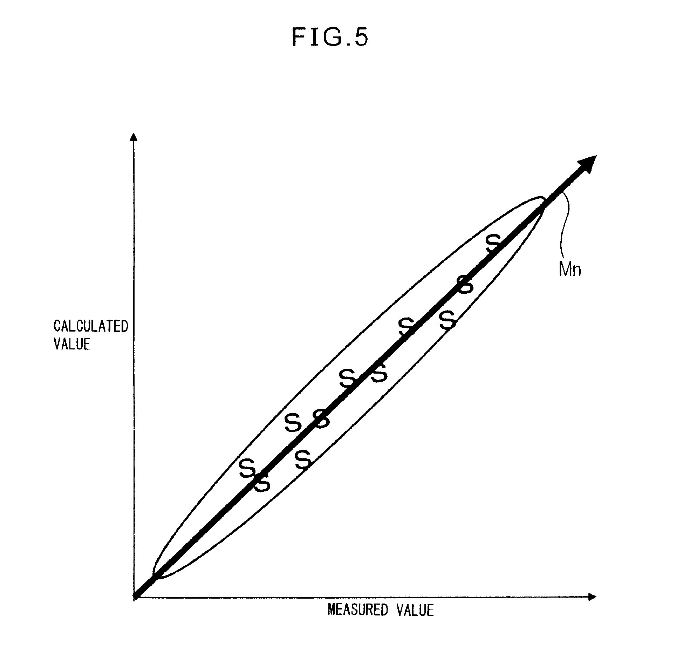

FIG. 5 is a diagram illustrating the correlation between the measured and the calculated values of the samples, obtained by using a multiple regression equation Mn for the n-th stage that is generated after repeating the above process several times. It can be seen that the multiple regression equation Mn fits well to the sample set that remained unremoved from the previous stages. Accordingly, the multiple regression equation Mn is chosen as the prediction model for the n-th stage, and this prediction model is applied to the remaining samples. In multiple regression analysis, there is provided a condition necessary to ensure data analysis accuracy, that is, a condition that imposes a limit on the ratio between the number of samples and the number of parameters, and if the sample set fails to satisfy this condition, no further multiple regression analysis is performed. Accordingly, all the remaining samples do not necessarily fall in the region near the multiple regression line in the final analysis stage.

From the initial sample set, the following prediction models are generated.

[Table 1]

Table 1 PREDICTION MODELS BASED ON MULTIPLE REGRESSION ANALYSIS

| STAGE | PREDICTION MODEL | APPLICABLE SAMPLES |
|---|---|---|
| 1ST STAGE | M1 | SAMPLES 11, 21, ... |
| 2ND STAGE | M2 | SAMPLES 12, 22, ... |
| 3RD STAGE | M3 | SAMPLES 13, 23, ... |
|  |  |  |
| n-TH STAGE | Mn | SAMPLES 1n, 2n, ... |

The total residual value for the prediction models in Table 1 is obtained by taking the sum of the residual values that are calculated for the individual training samples in the sample set by using the prediction models for the respective stages to which the respective samples belong. For example, for the training sample 11, the calculated value of the dependent variable is obtained by using the prediction model M1 for the first stage, and the difference between the calculated and the measured value is taken as the residual value. Likewise, for the training sample 23, the calculated value of the dependent variable is obtained by using the prediction model M3 for the third stage, and the absolute difference between the calculated and the measured value is taken as the residual value. The residual value is obtained in like manner for every one of the training samples, and the sum is taken as the total residual value. Since the residual value of each individual training sample is determined by using the best-fit prediction model as described above, each residual value is invariably low, and hence it is expected that the total residual value becomes much lower than that obtained by the prior art method (the method that determines the prediction model by a single multiple regression analysis).

When predicting the dependent variable for a sample for which the measured value of the dependent variable is unknown by using the prediction model in Table 1, first it is determined which training sample in the sample set is most similar to the unknown sample. For example, when the sample is a chemical substance, a training sample whose chemical structure is most similar to that of the unknown sample is identified. This can be easily accomplished by performing a known structural similarity calculation using, for example, a Tanimoto coefficient or the like. Once the training sample most similar to the unknown sample is identified, the stage to which the training sample belongs is identified from Table 1; then, the dependent variable of the unknown sample is calculated by applying the prediction model for the thus identified stage to the unknown sample. The dependent variable of the unknown sample can thus be predicted with high accuracy. Since the physical/chemical characteristics or properties or the toxicity, etc., are similar between chemical compounds having similar structures, the prediction accuracy according to the present invention is very high.

When identifying training samples that best fit the multiple regression equation generated in each stage, a method may be employed that identifies a predetermined number of training samples in order of increasing residual value, rather than providing a threshold value for the residual value.

[First embodiment]

A first embodiments will be described below.

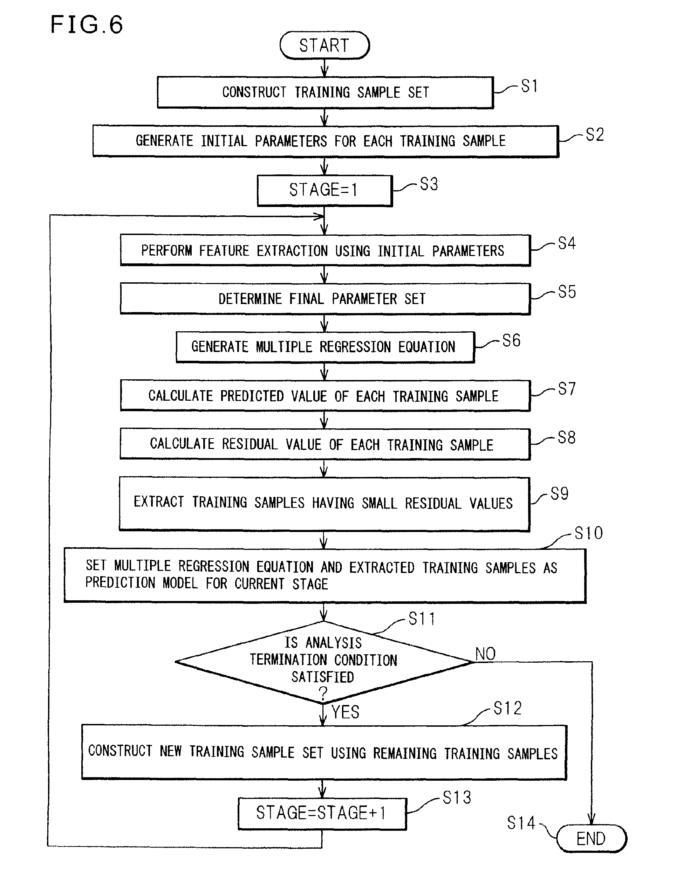

FIG. 6 is a flowchart illustrating a general procedure for implementing a prediction model generation method according to the first embodiment. First, in step S1, a training sample set is constructed using a plurality of samples whose values of the dependent variable to be analyzed are known. In this embodiment, fish toxicity is taken as the dependent variable. More specifically, the 96-hour IC50 is taken as the dependent variable. The IC50 means 50% inhibitory concentration which is the concentration of a chemical compound that is considered to inhibit swimming, multiplication, growth (bloom in the case of algae), enzymic activity, etc. for 50% of a set of test subjects, and provides an important measure in the evaluation of environmental toxicity of a chemical compound. The sample set here contains a total of 86 samples.

Next, in step S2, initial parameters (explanatory variables) to be used in multiple regression analysis are generated for each individual training sample. ADMEWORKS-ModelBuilder marketed by Fujitsu can automatically generate 4000 or more kinds of parameters based on the two- or three-dimensional structural formulas and various properties of chemicals. Next, STAGE is set to 1 (step S3), and feature extraction is performed on the initial parameters generated in step S2, to remove noise parameters not needed in the multiple regression analysis (step S4) and thereby determine the final parameter set (step S5). In the present embodiment, 11 parameters are selected as the final parameters for STAGE 1.

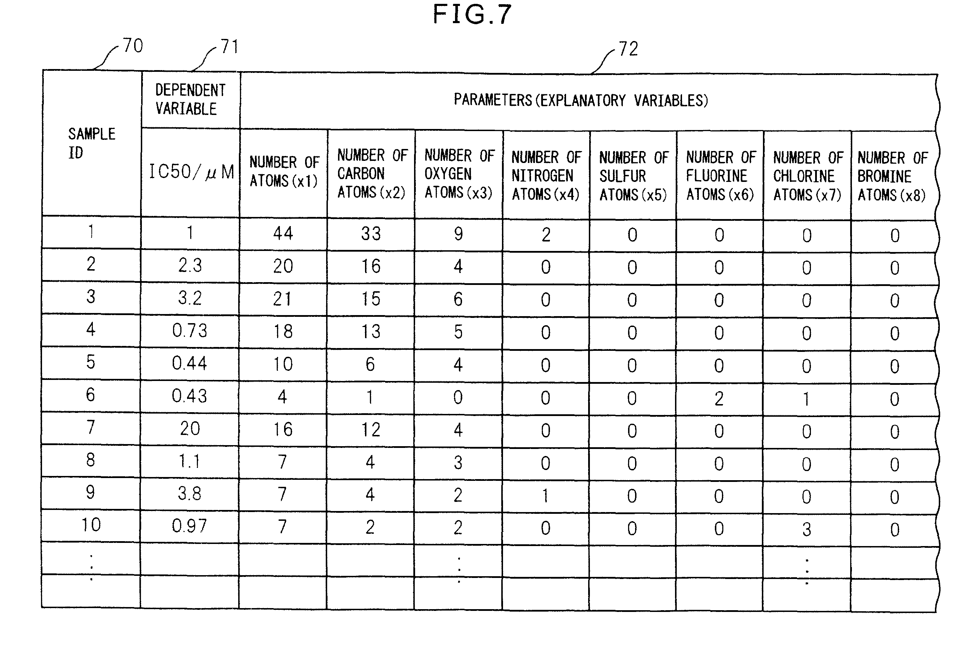

FIG. 7 illustrates one example of an initial parameter set table. Column 70 in FIG. 7 designates the ID for identifying each sample which is a chemical compound. Column 71 designates the value of the dependent variable LC50 of each sample in units of $\mu$Mol. Column 72 indicates the explanatory variables forming the final parameter set. In the illustrated example, the total number of atoms ($x1$) in each sample, the number of carbon atoms ($x2$), the number of oxygen atoms ($x3$), the number of nitrogen atoms ($x4$), the number of sulfur atoms ($x5$), the number of fluorine atoms ($x6$), the number of chlorine atoms ($x7$), the number of bromine atoms ($x8$), etc. are taken as the explanatory variables.

In the table of FIG. 7, the numeric value carried in each cell is a parameter value for the corresponding sample. For example, it is depicted that the chemical compound designated by sample ID 3 has an IC50 value of 3.2 $\mu$M (micromols), and that the total number of atoms in that chemical compound is 21, of which the number of carbon atoms is 15 and the number of oxygen atoms is 6, and the chemical compound does not contain any nitrogen, sulfur, fluorine, chlorine, or bromine atoms.

In step S6 of FIG. 6, the multiple regression equation M1 for the first stage is generated by performing multiple regression analysis using, for example, the data depicted in the data table of FIG. 7. The multiple regression equation M1 is expressed by the previously given equation (1).

Multiple regression equation (M1):

$$M1 = a1 \cdot x1 \pm a2 \cdot x2 \pm ... \pm an \cdot xn \pm C1 \quad (1)$$

where $a1, a2, ..., an$ are coefficients for the respective parameters $x1, x2, ..., xn$, and $C1$ is a constant. When the first multiple regression equation M1 is thus generated, the value (predicted value) of the dependent variable is calculated in step S7 for each training sample by using the multiple regression equation M1. The calculated value of the dependent variable of each training sample is obtained by substituting the parameter values of the sample, such as depicted in FIG. 7, into the above equation (1).

In step S8, the residual value is calculated for each training sample by comparing the predicted value calculated in step S7 with the measured value of the dependent variable. All of the training samples may be sorted in order of increasing residual value (absolute value). In step S9, training samples having small residual values are extracted from the initial sample set. The training samples may be extracted by either one of the following methods: one is to set a suitable threshold value for the residual value and to extract the training samples having residual values not larger than the threshold value, and the other is to extract a predetermined number of training samples in order of increasing residual value.

However, the threshold value for the residual value may be set to 0. Alternatively, the threshold value may be set equal to the result of dividing the largest residual value by the number of samples. In this case, the threshold value is different for each stage. When extracting a predetermined number of training samples in order of increasing residual value, the number of samples to be extracted may be set to 1, or it may be set as a percentage, for example, 3%, of the total number of samples in each stage.

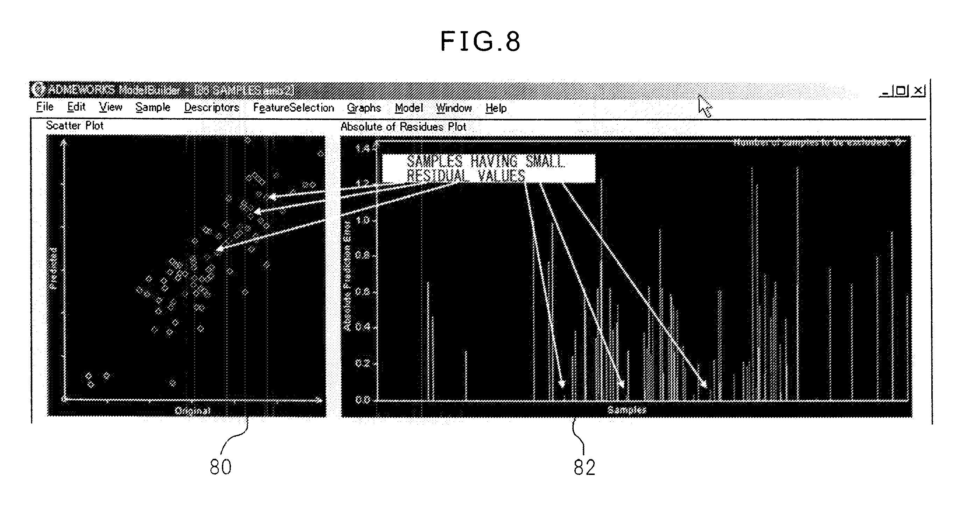

FIG. 8 is a graphical representation of the results of the first multiple regression analysis. In FIG. 8, reference numeral 80 indicates a graph plotting the calculated values (predicted values) of the dependent variable against the measured values for the respective samples, and 82 indicates a bar graph plotting the residual values (absolute values) of the respective samples. In the graph 80, the abscissa represents the measured value of the dependent variable, and the ordinate the calculated value of the dependent variable. In the graph 82, the abscissa represents the sample ID, and the ordinate the residual value. The smaller the residual value (in terms of the absolute value: the same applied hereinafter), the better the training sample fits the initial multiple regression equation generated in step S6. Accordingly, samples having small residual values are identified as indicated by arrows on the graphs 80 and 82, and these samples are removed from the initial training sample set.

In step S10 of FIG. 6, the multiple regression equation M1 and the training samples extracted in step S9 are set as a prediction model for the first stage and stored in a storage device. In step S11, it is determined whether the condition for terminating the analysis is satisfied or not. It is determined that the analysis termination condition is satisfied, for example, when the number of stages has reached a preset maximum number or the number of samples in the training sample set has decreased to or below a preset minimum number, or when the reliability metric has decreased to or below a predetermined value or the smallest of the residual values of the samples has become larger than a preset value. The value preset for the smallest of the residual values of the samples is, for example, the threshold value determined for the residual value in step S9.

The reliability metric is defined by the value obtained by dividing the number of samples by the number of parameters; if this value is small, the multiple regression equation generated using the samples and the parameters has hardly any scientific or data analytic meaning, and it is determined that the analysis has failed, no matter how high the value of the correlation coefficient R or the coefficient of determination R is. Usually, when this metric value is larger than 5, the analysis is judged to be a meaningful data analysis (successful analysis), and as the value becomes farther larger than 5, the reliability of the multiple regression equation becomes correspondingly higher. Any multiple regression equation obtained under conditions where the reliability metric is smaller than 5 is judged to be one generated by a meaningless data analysis, and it is determined that the data analysis has failed. Accordingly, this reliability metric provides a measure of great importance in the multiple regression analysis. Since the minimum acceptable value of the reliability metric is 5, if the number of parameters is 1, the minimum number of samples is 5. Therefore, in step S11, the minimum number of samples may be preset at 5.

If it is determined in step S11 that any one of the termination conditions is satisfied (NO in step S11), the process is terminated in step S14. If none of the termination conditions is satisfied in step S11 (YES in step S11), then in step S12 a new training sample set is constructed using the remaining training samples, and STAGE is incremented by 1 in step S13. Then, the process from step S4 on is repeated.

When the process from step S4 on is repeated, a new final parameter set is constructed in step S5, and a new multiple regression equation M2 is generated in step S6. In step S7, the predicted value of each training sample is calculated by using the new multiple regression equation M2, and in stepS8, the residual value of each training sample is calculated based on the new multiple regression equation M2.

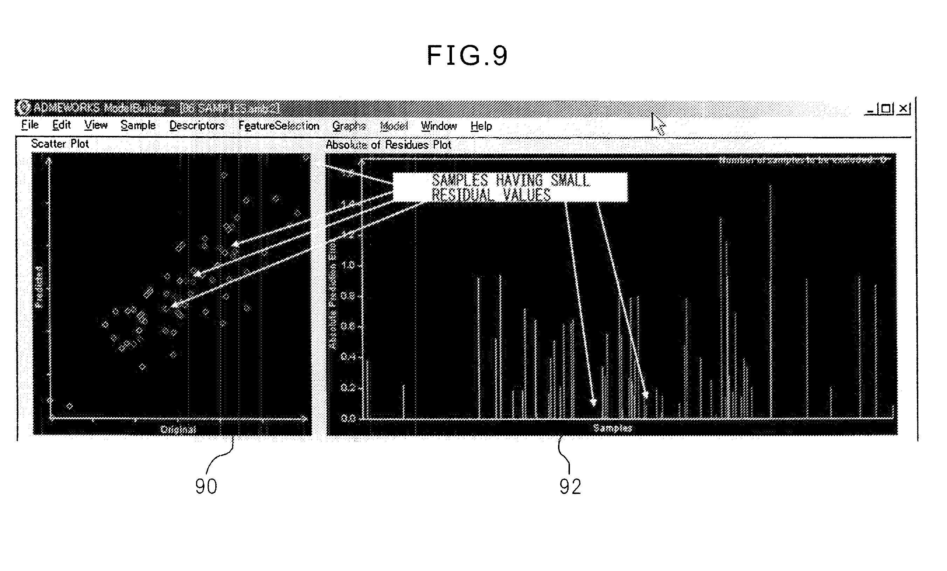

FIG. 9 is a diagram illustrating the results of the second multiple regression analysis in the form of graphics displayed on a computer screen. In FIG. 9, reference numeral 90 indicates a graph plotting the calculated values (predicted values) of the dependent variable against the measured values for the respective samples, and 92 indicates a graph plotting the residual values of the respective samples. In the graph 90, the abscissa represents the measured value of the dependent variable, and the ordinate of the calculated value of the dependent variable. In the graph 92, the abscissa represents the sample ID, and the ordinate the residual value. Since 17 training samples have been removed as a result of the first multiple regression analysis illustrated in FIG. 8, the second multiple regression analysis is performed on the remaining 69 samples. The final parameter set here contains nine parameters.

As depicted in FIG. 9, samples having small residual values are newly generated as a result of the new multiple regression analysis; therefore, in step S9, these samples are extracted, and in step S10, the multiple regression equation M2 and the extracted samples are set as a prediction model for the second stage.

Then, it is determined in step S11 whether the termination condition is satisfied or not; if NO, then in step S12 a new training sample set is constructed using the remaining training samples, and the process proceeds to the next stage. Here, step S11 may be carried out immediately following the step S5. In that case, if the analysis termination condition is not satisfied in step S11, the new multiple regression equation is generated.

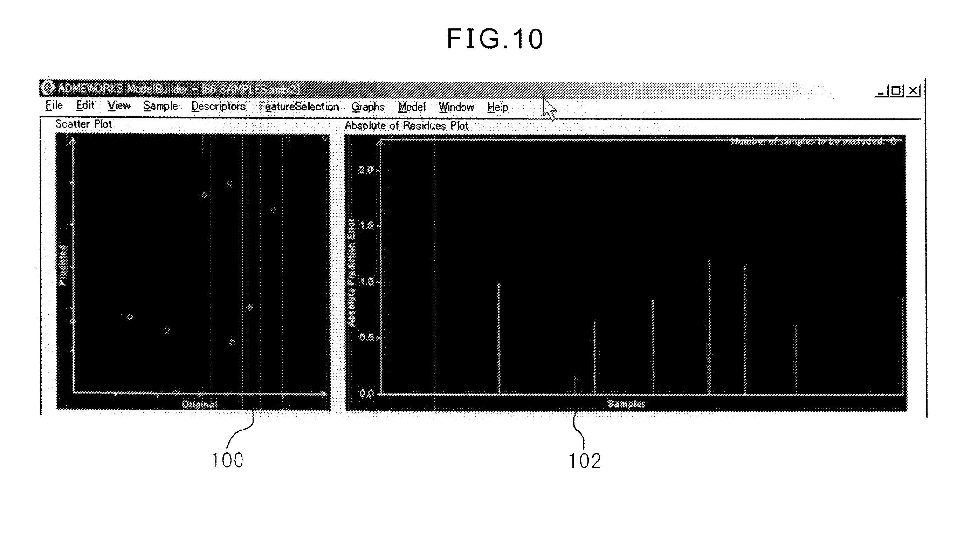

FIG. 10 is a diagram illustrating, in the form of graphics displayed on a computer screen, the results of the multiple regression analysis performed in a stage after the process from step S4 on has been repeated several times. In FIG. 10, as in FIGS. 8 and 9, reference numeral 100 indicates a graph plotting the calculated values (predicted values) of the dependent variable against the measured values for the respective samples, and 102 indicates a graph plotting the residual values of the respective samples. In the multiple regression analysis illustrated in FIG. 10, the number of samples is 10, and the number of parameters is 2.

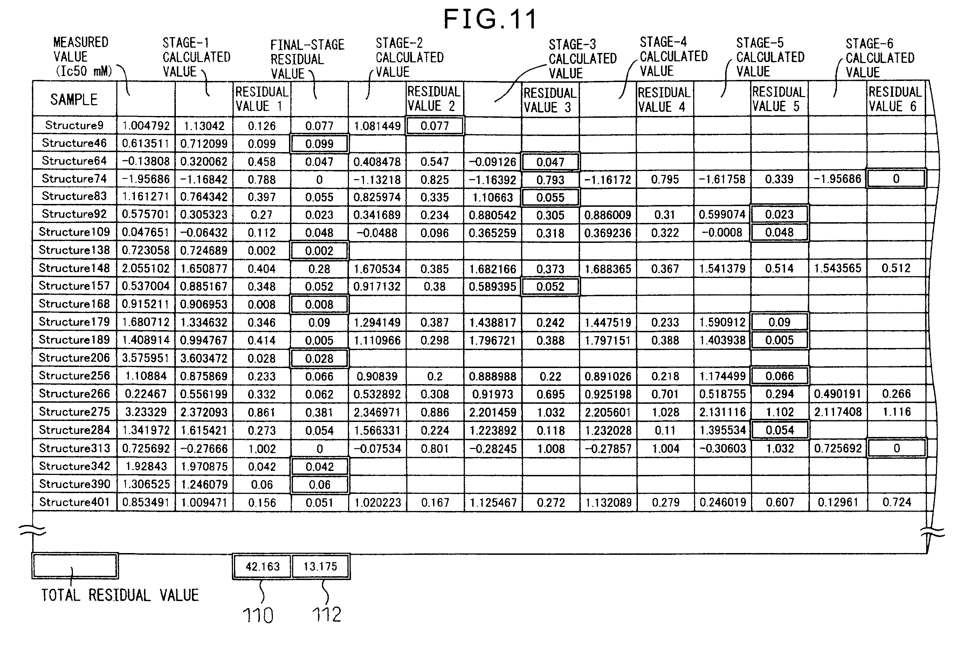

FIG. 11 is a table that summarizes the results of the multi-stage regression analysis for some of the 86 samples. The "STAGE-1 CALCULATED VALUE" column indicates the predicted value of each sample calculated using the multiple regression equation M1, and the "RESIDUAL VALUE 1" column indicates the difference between the measured value of each sample and its corresponding value in the "STAGE-1 CALCULATED VALUES" column. The "STAGE-2 CALCULATED VALUE" column indicates the predicted value of each sample calculated using the multiple regression equation M2, and the "RESIDUAL VALUE 2" column indicates the difference between the measured value of each sample and its corresponding value in the "STAGE-2 CALCULATED VALUE" column. The predicted and residual values in the subsequent stages are indicated in like manner.

In the case of the sample designated "Structure 9" in FIG. 11, the residual value becomes sufficiently small as depicted in the "RESIDUAL VALUE 2" column as a result of the calculation in the second stage, and the sample is thus removed as a discriminated sample from the sample set. No further multiple regression is performed on this sample. The final-stage residual value of the sample "Structure 9" is 0.077. In the case of the sample designated "Structure 46", the residual value becomes sufficiently small as a result of the calculation in the first stage, and the sample is thus removed as a discriminated sample from the sample set. No further multiple regression is performed on this sample. The final-stage residual value of the sample "Structure 46" is 0.099.

In the case of the sample designated "Structure 74", the residual value becomes 0 as a result of the calculation in the sixth stage, and the sample is thus removed as a discriminated sample from the sample set. No further multiple regression is performed on this sample. The fact that the final-stage residual value of the sample "Structure 74" is 0 means that the predicted value exactly matches the measured value. In the case of the sample designated "Structure 401", the residual value does not become sufficiently small in any of the stages depicted here, but the residual value becomes sufficiently small in the seventh stage, and the sample is thus removed as a discriminated sample from the sample set. The residual value in this stage, i.e., the final-stage residual value, is 0.051.

In FIG. 11, the value in cell 110 indicates the sum of the residual values of all the 86 samples in the first stage. In the prior art fitting technique that involves only one analysis stage, the value in cell 110 directly indicates the total residual value which is one of the metrics for measuring the goodness of the fitting. In the fitting technique according to the present embodiment, the sum of the final-stage residual values of all the samples, i.e., the value carried in cell 112, indicates the total residual value. As is apparent from a comparison between the value in cell 110 and the value in cell 112, according to the fitting technique of the present embodiment, the total residual value is reduced by a factor of three or more compared with the prior art technique; this clearly depicts the superiority of the technique of the present embodiment.

As described above, according to the flowchart of FIG. 6, a prediction model can be generated that reflects maximally the various kinds of information that the individual samples have. The format of the prediction model is the same as that indicated in the earlier presented Table 1. While the above embodiment has been described for the generation of prediction models for predicting the LC50, i.e., 50% lethal concentration, of chemical compounds, it will be appreciated that the technique illustrated in the flowchart of FIG. 6 can also be applied to the case where 50% effective concentration (EC50) or 50% inhibitory concentration (IC50) or the like is taken as the dependent variable. The technique is also equally applicable to the prediction of the biodegradability or bioaccumulativeness of chemical compounds.

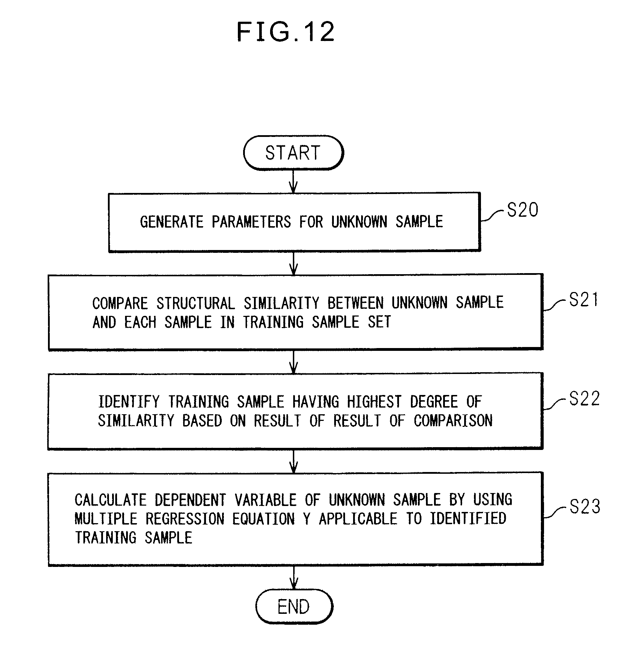

FIG. 12 is a flowchart illustrating a procedure for predicting the value of the dependent variable for a sample whose dependent variable value is unknown, by using a prediction model generated, for example, in accordance with the procedure illustrated in the flowchart of FIG. 6. First, in step S20, parameters are generated for the unknown sample. The kinds of the parameters generated here may be the same as those of the initial parameters generated for the training samples. In step S21, the degree of structural similarity between the unknown sample and each training sample in the training sample set is calculated.

Various known approaches are available for the calculation of structural similarities of chemical compounds, and any suitable one may be chosen. Since these are known techniques, no detailed description will be given here. The present inventor filed a patent application PCT/JP2007/066286 for the generation of a prediction model utilizing structural similarities of chemical compounds, in which the structural similarity calculation is described in detail; if necessary, reference is made to this patent document.

If a training sample most similar to the unknown sample is identified in step S22, the dependent variable of the unknown sample is calculated in step S23 by using the multiple regression equation M(n) applicable to the identified training sample, and the result is taken as the predicted value, after which the process is terminated. To describe the processing of step S23 in further detail by referring to Table 1, suppose that in step S22 the training sample 22, for example, is identified as being most similar in structure to the unknown sample; in this case, the stage to which the training sample 22 belongs is identified from Table 1. In the illustrated example, the training sample 22 belongs to the second stage. Accordingly, in step S23, the dependent variable of the unknown sample is calculated by using the prediction model M2 for the second stage, and the result is taken as the predicted value. Thus, the dependent variable of the unknown sample is calculated with high accuracy.

[Second embodiment]

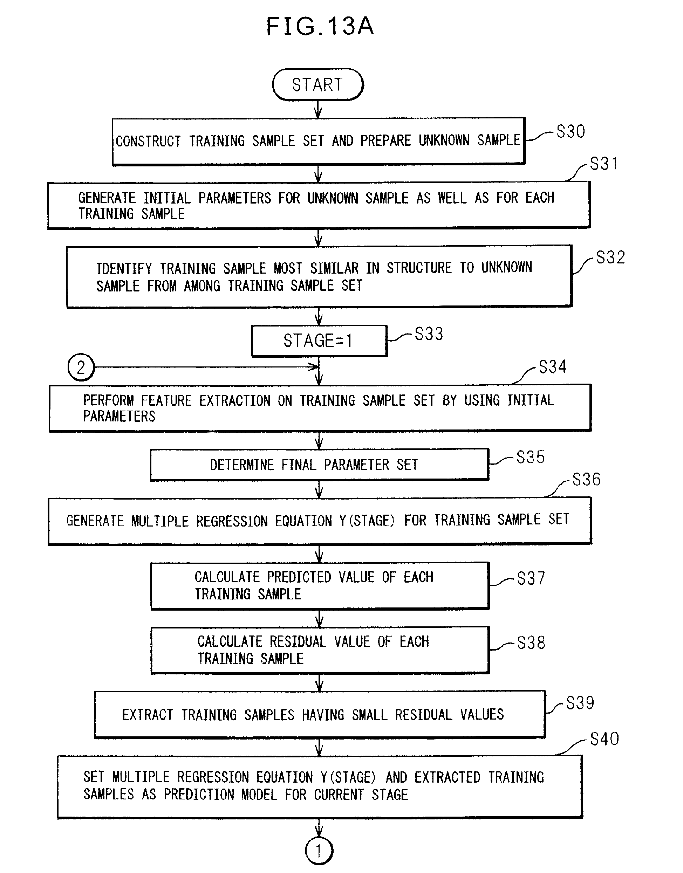

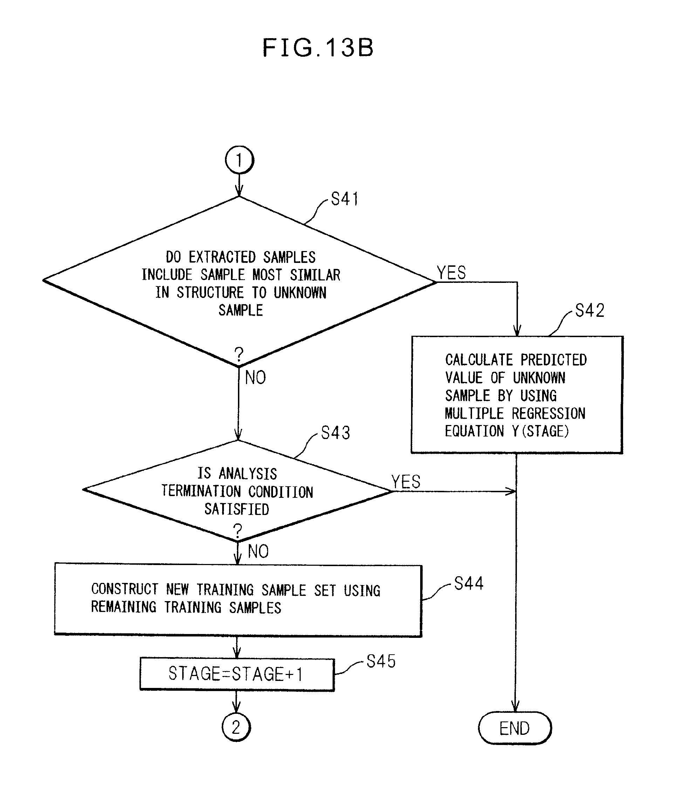

A second embodiment will be described below with reference to FIGS. 13A and 13B. In this embodiment, the process for generating a prediction model using a training sample set and the process for making a prediction about an unknown sample are performed in parallel fashion. In the EU, the REACH regulation has entered into force, and it is expected that a large amount of data on chemical toxicities will be accumulated as its implementation proceeds. Usually, a prediction model is generated by gathering samples whose dependent variable values are known and by constructing a training sample set using these known samples. The larger the number of samples contained in the training sample set, the higher the prediction accuracy of the generated prediction model. Therefore, when new data usable as training samples are accumulated after generating the prediction model, it is desirable to generate a new prediction model using a new training sample set constructed by adding the new data.

However, for that purpose, the prediction model has to be updated periodically, which takes a lot of labor and cost. If a system can be constructed that performs the prediction model generation process and the unknown sample prediction process in parallel fashion, then there is no need to fix the training sample set, and the unknown sample prediction can always be performed by using a training sample set constructed by adding new data. The present embodiment aims to achieve such a prediction system. Since the prediction is performed without having to use a fixed prediction model, this system may be called a model-free system. Such a model-free system needs large computing power to handle a large amount of data but, with the development of supercomputers such as peta-scale computers, a model-free system that handles a large amount of data can be easily implemented.

FIGS. 13A and 13B are flowcharts illustrating a general procedure for implementing the prediction method according to the second embodiment. First, in step S30, a training sample set is constructed using a plurality of samples whose values of the dependent variable to be analyzed are known. At the same time, an unknown sample to be predicted is prepared. In step S31, initial parameters are generated for the unknown sample as well as for each training sample. If the initial parameters generated for the training sample set are prestored in the form of a data table, use may be made of this data table; in that case, the initial parameters in step S31 need only be generated for the unknown sample. If there occurs a new training sample to be added to the existing training sample set, initial parameters need only be generated for that new training sample.

In step S32, a training sample most similar in structure to the unknown sample is identified based on the initial parameters generated in step S31. The method described in connection with steps S21 and S22 in the embodiment of FIG. 12 is used. Next, STAGE is set to 1 in step S33; then, in step S34 to step S40, the multiple regression equation M(STAGE) for the current stage is determined by performing multiple regression analysis on the training sample set, and training samples having small residual values are identified based on the multiple regression equation M(STAGE). The process from step S34 to step S40 is essentially the same as the process from step S4 to step S10 in the first embodiment illustrated in FIG. 6, and therefore, will not be described in detail here.

When the multiple regression equation M(STAGE) and the training samples to be extracted in the current stage have been determined in the process performed up to step S40, the process proceeds to step S41 in FIG. 13B to determine whether the training sample most similar in structure to the unknown sample is included in the training samples to be extracted. If such a training sample is included (YES in step S41), then the predicted value of the unknown sample is calculated in step S42 by using the multiple regression equation M(STAGE), and the process is terminated.

On the other hand, if it is determined in step S41 that no such sample is included (NO in step S41), the process proceeds to step S43 and then proceeds to perform the multiple regression analysis in the next stage by constructing a new training sample set from the remaining training samples. The process from step S43 to S45 corresponds to the process from step S11 to step S13 in the flowchart of the first embodiment illustrated in FIG. 6, and therefore, will not be described in detail here.

As described above, according the flowcharts illustrated in FIGS. 13A and 13B, if the training sample most similar in structure to the unknown sample is included in the training samples to be extracted in the multiple regression analysis in any one of the stages, the multiple regression equation M(STAGE) generated in that stage is determined as the prediction model for the unknown sample, and the predicted value can thus be calculated. There is therefore no need to proceed to the next stage.

According to the prediction system of the present embodiment, if a program is created that implements the procedures illustrated in FIGS. 13A and 13B, there is no need to update the prediction model each time a new training sample is added. If any training sample is added, the measured value of the dependent variable and the initial parameters for that training sample need only be added to a data table or a database. This serves to greatly enhance the versatility of the prediction system.

[Third embodiment]

The first and second embodiments are each implemented in the form of a program and executed on a personal computer, a parallel computer, or a supercomputer. It is also possible to construct a prediction model generation apparatus based on the first or second embodiment.

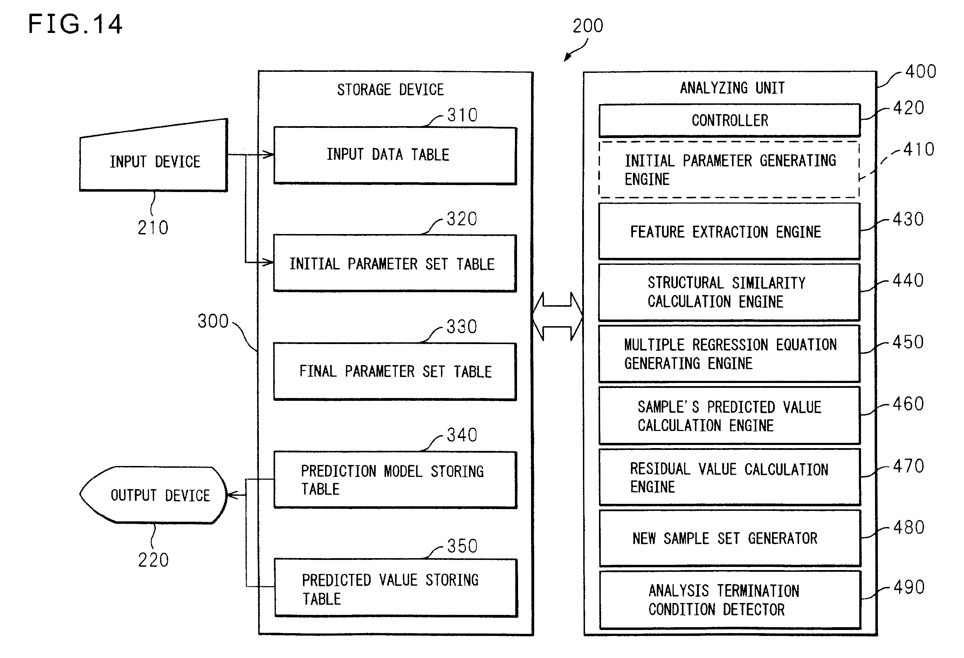

FIG. 14 is a block diagram illustrating the system configuration of a prediction model generation apparatus according to a third embodiment. This prediction model generation apparatus is constructed to be able to implement the process illustrated in the second embodiment. The prediction model generation apparatus 200 includes an input device 210 for entering sample data such as the structural formula of a sample, the measured value of the dependent variable, etc., and an output device 220 that can output a prediction model, the prediction result of an unknown sample, or data that the user needs during processing. Unknown sample information and training sample information necessary for generating a prediction model based on multiple regression analysis are entered from the input device 210 into an input data table 310 in a storage device 300. Likewise, initial parameter set data is entered from the input device 210 into an initial parameter set table 320. If an analyzing unit 400 has an engine 410 for automatically generating the initial parameters for input sample information, there is no need to enter the initial parameter set data from the input device 210.

In FIG. 14, reference numeral 330 is a table for storing the final parameter set obtained by performing feature extraction on the initial parameter set. Reference numeral 340 is a table for storing each prediction model generated as a result of the analysis; more specifically, it stores the multiple regression equation M(STAGE) determined for each stage and information concerning a set of samples to which the multiple regression equation M(STAGE) is applied. Reference numeral 350 is a table for storing the predicted value calculated for an unknown sample. More specifically, if there are a plurality of unknown samples, the table stores temporarily the predicted values calculated for the plurality of unknown samples and outputs them at once at a later time.

The analyzing unit 400 includes a controller 420, an initial parameter generating engine 410, a feature extraction engine 430, a structural similarity calculation engine 440, a multiple regression equation generating engine 450, a sample's predicted value calculation engine 460, a residual value calculation engine 470, a new sample set generator 480, and an analysis termination condition detector 490. If provisions are made to generate the initial parameters outside the apparatus, the initial parameter generating engine 410 is not needed. The initial parameter generating engine 410 and the feature extraction engine 430 can be implemented using known ones.

The feature extraction engine 430 determines the final parameter set by performing feature extraction on the initial parameter set, and stores it in the final parameter set table 330. The structural similarity calculation engine 440 selects some of the initial parameters appropriately according to various similarity calculation algorithms, calculates the degree of structural similarity between the unknown sample and each training sample, and identifies the training sample most similar in structure to the unknown sample. The multiple regression equation generating engine 450 is equipped with various known multiple regression equation generating programs and, using the multiple regression equation generating program specified by the user or suitably selected by the system, it generates the multiple regression equation by performing multiple regression analysis on the input sample set while referring to the final parameter set table 330. The thus generated multiple regression equation is stored in the prediction model storing table 340.

The sample's predicted value calculation engine 460 calculates the predicted value of each training sample by using the multiple regression equation generated by the multiple regression equation generating engine 450. When predicting an unknown sample, it calculates the predicted value of the unknown sample by using the multiple regression equation stored in the prediction model storing table 340. The residual value calculation engine 470 compares the predicted value calculated by the sample's predicted value calculation engine 460 with the measured value of the dependent variable stored for that sample in the input data table 310, and calculates the difference between them. The new sample set generator 480, based on the residual values calculated by the residual value calculation engine 470, identifies the samples to be removed from the training sample set and generates a new sample set to be used as the sample set for the next stage. The analysis termination condition detector 490 is used to determine whether the multiple regression analysis for the subsequent stage is to be performed or not, and performs the processing described in step S11 of FIG. 6 or step S43 of FIG. 13B.

The initial parameter generating engine 410, the feature extraction engine 430, the structural similarity calculation engine 440, the multiple regression equation generating engine 450, the sample's predicted value calculation engine 460, the residual value calculation engine 470, the new sample set generator 480, and the analysis termination condition detector 490 each operate under the control of the controller 420 to carry out the processes illustrated in FIG. 6 and FIGS. 13A and 13B. The analysis termination condition may be preset by the system or may be suitably set by the user via the input device 210.

The multiple regression equation M(STAGE) generated for each stage by the analyzing unit 400, the samples to which the multiple regression equation is applied, and the predicted values are stored in the prediction model storing table 340 and the predicted value storing table, respectively, or output via the output device 220. The output device can be selected from among various kinds of storage devices, a display, a printer, etc., and the output format can be suitably selected from among various kinds of files (for example, USB file), display, printout, etc.

Each of the above programs can be stored on a computer-readable recording medium, and such recording media can be distributed and circulated for use. Further, each of the above programs can be distributed and circulated through communication networks such as the Internet. The computer-readable recording media include magnetic recording devices, optical disks, magneto-optical disks, or semiconductor memories (such as RAM and ROM). Examples of magnetic recording devices include hard disk drives (HDDs), flexible disks (FDs), magnetic tapes (MTs), etc. Examples of optical disks include DVDs (Digital Versatile Discs), DVD-RAMs, CD-ROMs, CR-RWs, etc. Examples of magneto-optical disks include MOs (Magneto-Optical discs).

INDUSTRIAL APPLICABILITY

The present invention is applicable to any industrial field to which multiple regression analysis can be applied. The main application fields are listed below.
1) Chemical data analysis
2) Biotechnology-related research
3) Protein-related research
4) Medical-related research
5) Food-related research
6) Economy-related research
7) Engineering-related research
8) Data analysis aimed at improving production yields, etc.
9) Environment-related research

In the field of chemical data analysis 1), the invention can be applied more particularly to the following researches.

(1) Structure-activity/ADME/toxicity/property relationships research
(2) Structure-spectrum relationships research
(3) Metabonomics-related research
(4) Chemometrics research

For example, in the field of structure-toxicity relationships research, it is important to predict the results of tests, such as 50% inhibitory concentration (IC50) tests, 50% effective concentration (EC50) tests, 50% lethal concentration (LC50) tests, degradability tests, accumulative tests, and 28-day repeated dose toxicity tests on chemicals. The reason is that these tests are each incorporated as one of the most important items into national-level chemical regulations such as industrial safety and health law and chemical examination law related to toxic chemicals regulations. Any chemical to be marketed is required to pass such concentration tests; otherwise, the chemical could not be manufactured in Japan, and the manufacturing activities of chemical companies would halt. Further, manufacturing overseas and exports of such chemicals are banned by safety regulations adopted in the countries concerned. For example, according to the REACH regulation adopted by the EU Parliament, any company using a chemical is obliged to predict and evaluate the concentration test results of that chemical. Accordingly, the method, apparatus, and program of the present invention that can predict such concentrations with high prediction accuracy provide an effective tool in addressing the REACH regulation.

**Claims**

**1.** A method for generating a prediction model based on multiple regression analysis, comprising:

a) constructing an initial sample set from samples for each of which a measured value of a dependent variable is known;
b) generating a multiple regression equation by performing multiple regression analysis on said initial sample set;
c) calculating a residual value for each of said samples on the basis of said multiple regression equation;
d) identifying, based on said residual value, a sample that fits said multiple regression equation;

e) constructing a new sample set by removing said identified sample from said initial sample set;

f) replacing said initial sample set by said new sample set, and repeating from said a) to said e); and

g) generating, from a combination of said multiple regression equation generated during each iteration of said repeating and said sample to be removed, a prediction model for a sample for which said dependent variable is unknown.

2. The method according to claim 1, wherein in said d), a predetermined number of samples taken in increasing order of said residual value are identified as samples to be removed.

3. The method according to claim 1, wherein in said d), any sample having a residual value not larger than a predetermined threshold value is identified as a sample to be removed.

4. The method according to claim 1, wherein said repeating in said f) is stopped when one of the following conditions is detected in said new sample set: the total number of samples has become equal to or smaller than a predetermined number; the smallest of the residual values of said samples has exceeded a predetermined value; the ratio of the number of samples to the number of parameters to be used in the multiple regression analysis has become equal to or smaller than a predetermined value; and the number of times of said repeating has exceeded a predetermined number.

5. The method according to claim 1, further comprising:

preparing a sample for which said dependent variable is unknown; and

identifying from among said initial sample set a sample having the highest degree of structural similarity to said unknown sample, and

wherein said repeating in said f) is stopped when the sample having the highest degree of structural similarity is included in said samples to be removed.

6. A program for generating a prediction model based on multiple regression analysis by causing a computer to execute:

a) constructing an initial sample set from samples for each of which a measured value of a dependent variable is known;

b) generating a multiple regression equation by performing multiple regression analysis on said initial sample set;

c) calculating a residual value for each of said samples on the basis of said multiple regression equation;

d) identifying, based on said residual value, a sample that fits said multiple regression equation;

e) constructing a new sample set by removing said identified sample from said initial sample set;

f) replacing said initial sample set by said new sample set, and repeating from said a) to said e); and

g) generating, from a combination of said multiple regression equation generated during each iteration of said repeating and said sample to be removed, a prediction model for a sample for which said dependent variable is unknown.

7. The program according to claim 6, wherein in said d), a predetermined number of samples taken in increasing order of said residual value are identified as samples to be removed.

8. The program according to claim 6, wherein in said d), any sample having a residual value not larger than a predetermined threshold value is identified as a sample to be removed.

9. The program according to claim 6, wherein said repeating in said f) is stopped when one of the following conditions is detected in said new sample set: the total number of samples has become equal to or smaller than a predetermined number; the smallest of the residual values of said samples has exceeded a predetermined value; the ratio of the number of samples to the number of parameters to be used in the multiple regression analysis has become equal to or smaller than a predetermined value; and the number of times of said repeating has exceeded a predetermined number.

10. The program according to claim 6, further comprising the of preparing a sample for which said dependent variable is unknown and identifying from among said initial sample set a sample having the highest degree of structural similarity to said unknown sample, and wherein said repeating in said f) is stopped when the sample having the highest degree of structural similarity is included in said samples to be removed.

11. A method for generating a chemical toxicity prediction model based on multiple regression analysis, comprising:

a) constructing an initial sample set from chemicals for each of which a measured value of a dependent variable is known, said dependent variable representing a given chemical toxicity;
b) generating a multiple regression equation by performing multiple regression analysis on said initial sample set;
c) calculating a residual value for each of said chemicals on the basis of said multiple regression equation;
d) identifying, based on said residual value, a sample that fits said multiple regression equation;
e) constructing a new sample set by removing said identified chemical from said initial sample set;
f) replacing said initial sample set by said new sample set, and repeating from said a) to said e); and
g) generating, from a combination of said multiple regression equation generated during each iteration of said repeating and said chemical to be removed, a prediction model for predicting said dependent variable for a chemical for which said dependent variable is unknown.

12. The method according to claim 11, wherein said given chemical toxicity is one selected from the group consisting of biodegradability, bioaccumulativeness, 50% inhibitory concentration, 50% effective concentration, and 50% lethal concentration of a chemical.

13. The method according to claim 11, wherein in said d), a predetermined number of samples taken in increasing order of said residual value are identified as samples to be removed.

14. The method according to claim 11, wherein in said d), any sample having a residual value not larger than a predetermined threshold value is identified as a sample to be removed.

15. The method according to claim 11, wherein said repeating in said f) is stopped when one of the following conditions is detected in said new sample set: the total number of samples has become equal to or smaller than a predetermined number; the smallest of the residual values of said samples has exceeded a predermined value; the ratio of the number of samples to the number of parameters to be used in the multiple regression analysis has become equal to or smaller than a predetermined value; and the number of times of said repeating has exceeded a predetermined number.

16. The method according to claim 11, further comprising:

preparing a sample for which said dependent variable is unknown; and
identifying from among said initial sample set a sample having the highest degree of structural similarity to said unknown sample, and
wherein said repeating in said f) is stopped when the sample having the highest degree of structural similarity is included in said samples to be removed.

17. A prediction model generation system comprising:

a first unit which constructs an initial sample set from samples for each of which a measured value of a dependent variable is known;
a second unit which generates a multiple regression equation by performing multiple regression analysis on said initial sample set;
a third unit which calculates a residual value for each of said samples on the basis of said multiple regression equation;
a fourth unit which identifies , based on said residual value, a sample that fits said multiple regression equation;
a fifth unit which constructs a new sample set by removing said identified sample from said initial sample set;
a sixth unit which replaces said initial sample set by said new sample set obtained by said fifth unit; and
a seventh unit which causes said sixth unit to stop said repeating when one of the following conditions is detected in said new sample set: the total number of samples has become equal to or smaller than a predetermined number; the smallest of the residual values of said samples has exceeded a predetermined value; the ratio of the number of samples to the number of parameters to be used in the multiple regression analysis has become equal to or smaller than a predetermined value; and the number of times of said repeating has exceeded a predetermined number.

18. The system according to claim 17, further comprising: a eighth unit which enters a sample for which said dependent variable is unknown; a ninth unit which identifies from among said initial sample set a sample having the highest degree of structural similarity to said unknown sample; and a 10th unit which causes said sixth unit to stop said repeating when the sample having the highest degree of structural similarity is included in said samples identified by said fourth unit as samples to be removed.

**19.** The system according to claim 17, wherein each of said samples is a chemical, and said dependent variable is a parameter defining a toxicity of said chemical selected from the group consisting of biodegradability, bioaccumulativeness, 50% inhibitory concentration, 50% effective concentration, and 50% lethal concentration.

**20.** A method for predicting a dependent variable for an unknown sample, comprising:

generating a plurality of prediction models for predicting said dependent variable for a sample whose dependent variable is unknown, wherein said plurality of prediction models are each generated by executing:

a) constructing an initial sample set from samples for each of which a measured value of said dependent variable is known;
b) generating a multiple regression equation by performing multiple regression analysis on said initial sample set;
c) calculating a residual value for each of said samples on the basis of said multiple regression equation;
d) identifying, based on said residual value, a sample that fits said multiple regression equation;
e) constructing a new sample set by removing said identified sample from said initial sample set; and
f) replacing said initial sample set by said new sample set, and repeating from said a) to said e), and wherein said plurality of prediction models are each constructed from a combination of said multiple regression equation generated during each iteration of said repeating and said sample to be removed;
calculating the degree of structural similarity between said sample whose dependent variable is unknown and each of said samples contained in said initial sample set;

identifying, based on said calculated degree of similarity, a sample having a structure closest to the structure of said unknown sample; and
calculating said dependent variable for said unknown sample by using said multiple regression equation included in one of said plurality of prediction models that is applicable to said identified sample.

# FIG.1

# FIG.2

## FIG.3

# FIG.4

# FIG.5

# FIG.6

```
                    ( START )
                        ↓
     CONSTRUCT TRAINING SAMPLE SET              ─ S1
                        ↓
   GENERATE INITIAL PARAMETERS FOR EACH TRAINING SAMPLE   ─ S2
                        ↓
                  STAGE=1                       ─ S3
                        ↓
   PERFORM FEATURE EXTRACTION USING INITIAL PARAMETERS   ─ S4
                        ↓
       DETERMINE FINAL PARAMETER SET           ─ S5
                        ↓
    GENERATE MULTIPLE REGRESSION EQUATION      ─ S6
                        ↓
   CALCULATE PREDICTED VALUE OF EACH TRAINING SAMPLE   ─ S7
                        ↓
   CALCULATE RESIDUAL VALUE OF EACH TRAINING SAMPLE   ─ S8
                        ↓
   EXTRACT TRAINING SAMPLES HAVING SMALL RESIDUAL VALUES   ─ S9
                        ↓
   SET MULTIPLE REGRESSION EQUATION AND EXTRACTED TRAINING SAMPLES AS   ─ S10
   PREDICTION MODEL FOR CURRENT STAGE
                        ↓
                    ◇ S11
              IS ANALYSIS
          TERMINATION CONDITION        NO
              SATISFIED
                  ?
                   ↓ YES
   CONSTRUCT NEW TRAINING SAMPLE SET USING REMAINING TRAINING SAMPLES   ─ S12
                        ↓
              STAGE=STAGE+1            ─ S13
                                    S14 ─ ( END )
```

# FIG.7

| SAMPLE ID | DEPENDENT VARIABLE | PARAMETERS (EXPLANATORY VARIABLES) | | | | | | | |
|---|---|---|---|---|---|---|---|---|---|
| | IC50/$\mu$M | NUMBER OF ATOMS (x1) | NUMBER OF CARBON ATOMS (x2) | NUMBER OF OXYGEN ATOMS (x3) | NUMBER OF NITROGEN ATOMS (x4) | NUMBER OF SULFUR ATOMS (x5) | NUMBER OF FLUORINE ATOMS (x6) | NUMBER OF CHLORINE ATOMS (x7) | NUMBER OF BROMINE ATOMS (x8) |
| 1 | 1 | 44 | 33 | 9 | 2 | 0 | 0 | 0 | 0 |
| 2 | 2.3 | 20 | 16 | 4 | 0 | 0 | 0 | 0 | 0 |
| 3 | 3.2 | 21 | 15 | 6 | 0 | 0 | 0 | 0 | 0 |
| 4 | 0.73 | 18 | 13 | 5 | 0 | 0 | 0 | 0 | 0 |
| 5 | 0.44 | 10 | 6 | 4 | 0 | 0 | 0 | 0 | 0 |
| 6 | 0.43 | 4 | 1 | 0 | 0 | 0 | 2 | 1 | 0 |
| 7 | 20 | 16 | 12 | 4 | 0 | 0 | 0 | 0 | 0 |
| 8 | 1.1 | 7 | 4 | 3 | 0 | 0 | 0 | 0 | 0 |
| 9 | 3.8 | 7 | 4 | 2 | 1 | 0 | 0 | 0 | 0 |
| 10 | 0.97 | 7 | 2 | 2 | 0 | 0 | 0 | 3 | 0 |
| ⋮ | | | | ⋮ | | | | ⋮ | |
| ⋮ | | | | ⋮ | | | | ⋮ | |

EP 2 323 081 A1

FIG.8

# FIG.9

# FIG.10

100

102

# FIG.11

| SAMPLE | MEASURED VALUE (Ic50 mM) | STAGE-1 CALCULATED VALUE | FINAL-STAGE RESIDUAL VALUE / RESIDUAL VALUE 1 | FINAL-STAGE RESIDUAL VALUE | STAGE-2 CALCULATED VALUE | RESIDUAL VALUE 2 | STAGE-3 CALCULATED VALUE | RESIDUAL VALUE 3 | STAGE-4 CALCULATED VALUE | RESIDUAL VALUE 4 | STAGE-5 CALCULATED VALUE | RESIDUAL VALUE 5 | STAGE-6 CALCULATED VALUE | RESIDUAL VALUE 6 |
|---|---|---|---|---|---|---|---|---|---|---|---|---|---|---|
| Structure9 | 1.004792 | 1.13042 | 0.126 | 0.077 | 1.081449 | 0.077 | | | | | | | | |
| Structure46 | 0.613511 | 0.712099 | 0.099 | 0.099 | | | | | | | | | | |
| Structure64 | -0.13808 | 0.320062 | 0.458 | 0.047 | 0.408478 | 0.547 | -0.09126 | 0.047 | | | | | | |
| Structure74 | -1.95686 | -1.16842 | 0.788 | 0 | -1.13218 | 0.825 | -1.16392 | 0.793 | -1.16172 | 0.795 | -1.61758 | 0.339 | -1.95686 | 0 |
| Structure83 | 1.161271 | 0.764342 | 0.397 | 0.055 | 0.825974 | 0.335 | 1.10663 | 0.055 | | | | | | |
| Structure92 | 0.575701 | 0.305323 | 0.27 | 0.023 | 0.341689 | 0.234 | 0.880542 | 0.305 | 0.886009 | 0.31 | 0.599074 | 0.023 | | |
| Structure109 | 0.047651 | -0.06432 | 0.112 | 0.048 | -0.0488 | 0.096 | 0.365259 | 0.318 | 0.369236 | 0.322 | -0.0008 | 0.048 | | |
| Structure138 | 0.723058 | 0.724689 | 0.002 | 0.002 | | | | | | | | | | |
| Structure148 | 2.055102 | 1.650877 | 0.404 | 0.28 | 1.670534 | 0.385 | 1.682166 | 0.373 | 1.688365 | 0.367 | 1.541379 | 0.514 | 1.543565 | 0.512 |
| Structure157 | 0.537004 | 0.885167 | 0.348 | 0.052 | 0.917132 | 0.38 | 0.589395 | 0.052 | | | | | | |
| Structure168 | 0.915211 | 0.906953 | 0.008 | 0.008 | | | | | | | | | | |
| Structure179 | 1.680712 | 1.334632 | 0.346 | 0.09 | 1.294149 | 0.387 | 1.438817 | 0.242 | 1.447519 | 0.233 | 1.590912 | 0.09 | | |
| Structure189 | 1.408914 | 0.994767 | 0.414 | 0.005 | 1.110966 | 0.298 | 1.796721 | 0.388 | 1.797151 | 0.388 | 1.403938 | 0.005 | | |
| Structure206 | 3.575951 | 3.603472 | 0.028 | 0.028 | | | | | | | | | | |
| Structure256 | 1.10884 | 0.875869 | 0.233 | 0.066 | 0.90839 | 0.2 | 0.888988 | 0.22 | 0.891026 | 0.218 | 1.174499 | 0.066 | | |
| Structure266 | 0.22467 | 0.556199 | 0.332 | 0.062 | 0.532892 | 0.308 | 0.91973 | 0.695 | 0.925198 | 0.701 | 0.518755 | 0.294 | 0.490191 | 0.266 |
| Structure275 | 3.23329 | 2.372093 | 0.861 | 0.381 | 2.346971 | 0.886 | 2.201459 | 1.032 | 2.205601 | 1.028 | 2.131116 | 1.102 | 2.117408 | 1.116 |
| Structure284 | 1.341972 | 1.615421 | 0.273 | 0.054 | 1.566331 | 0.224 | 1.223892 | 0.118 | 1.232028 | 0.11 | 1.395534 | 0.054 | | |
| Structure313 | 0.725692 | -0.27666 | 1.002 | 0 | -0.07534 | 0.801 | -0.28245 | 1.008 | -0.27857 | 1.004 | -0.30603 | 1.032 | 0.725692 | 0 |
| Structure342 | 1.92843 | 1.970875 | 0.042 | 0.042 | | | | | | | | | | |
| Structure390 | 1.306525 | 1.246079 | 0.06 | 0.06 | | | | | | | | | | |
| Structure401 | 0.853491 | 1.009471 | 0.156 | 0.051 | 1.020223 | 0.167 | 1.125467 | 0.272 | 1.132089 | 0.279 | 0.246019 | 0.607 | 0.12961 | 0.724 |

TOTAL RESIDUAL VALUE: 42.163 | 13.175

110     112

EP 2 323 081 A1

# FIG.12

START

GENERATE PARAMETERS FOR UNKNOWN SAMPLE — S20

COMPARE STRUCTURAL SIMILARITY BETWEEN UNKNOWN SAMPLE AND EACH SAMPLE IN TRAINING SAMPLE SET — S21

IDENTIFY TRAINING SAMPLE HAVING HIGHEST DEGREE OF SIMILARITY BASED ON RESULT OF RESULT OF COMPARISON — S22

CALCULATE DEPENDENT VARIABLE OF UNKNOWN SAMPLE BY USING MULTIPLE REGRESSION EQUATION Y APPLICABLE TO IDENTIFIED TRAINING SAMPLE — S23

END

# FIG.13A

START

CONSTRUCT TRAINING SAMPLE SET AND PREPARE UNKNOWN SAMPLE ─S30

GENERATE INITIAL PARAMETERS FOR UNKNOWN SAMPLE AS WELL AS FOR EACH TRAINING SAMPLE ─S31

IDENTIFY TRAINING SAMPLE MOST SIMILAR IN STRUCTURE TO UNKNOWN SAMPLE FROM AMONG TRAINING SAMPLE SET ─S32

STAGE=1 ─S33

② →

PERFORM FEATURE EXTRACTION ON TRAINING SAMPLE SET BY USING INITIAL PARAMETERS ─S34

DETERMINE FINAL PARAMETER SET ─S35

GENERATE MULTIPLE REGRESSION EQUATION Y(STAGE) FOR TRAINING SAMPLE SET ─S36

CALCULATE PREDICTED VALUE OF EACH TRAINING SAMPLE ─S37

CALCULATE RESIDUAL VALUE OF EACH TRAINING SAMPLE ─S38

EXTRACT TRAINING SAMPLES HAVING SMALL RESIDUAL VALUES ─S39

SET MULTIPLE REGRESSION EQUATION Y(STAGE) AND EXTRACTED TRAINING SAMPLES AS PREDICTION MODEL FOR CURRENT STAGE ─S40

①

# FIG.13B

①

S41

DO EXTRACTED SAMPLES
INCLUDE SAMPLE MOST SIMILAR
IN STRUCTURE TO UNKNOWN
SAMPLE
?

YES

NO

S42

CALCULATE PREDICTED
VALUE OF UNKNOWN
SAMPLE BY USING
MULTIPLE REGRESSION
EQUATION Y(STAGE)

S43

IS ANALYSIS
TERMINATION CONDITION
SATISFIED
?

YES

NO

CONSTRUCT NEW TRAINING SAMPLE SET USING
REMAINING TRAINING SAMPLES

S44

STAGE=STAGE+1

S45

②

END

# FIG.14

<div align="center">

**INTERNATIONAL SEARCH REPORT**

</div>

| | International application No. |
|---|---|
| | PCT/JP2008/064061 |

**A. CLASSIFICATION OF SUBJECT MATTER**
*G06N5/04*(2006.01)i, *C40B30/02*(2006.01)i, *G06Q10/00*(2006.01)i

According to International Patent Classification (IPC) or to both national classification and IPC

**B. FIELDS SEARCHED**

Minimum documentation searched (classification system followed by classification symbols)
G06N5/04, C40B30/02, G06Q10/00

Documentation searched other than minimum documentation to the extent that such documents are included in the fields searched
| | | |
|---|---|---|
| Jitsuyo Shinan Koho | 1922-1996 | Jitsuyo Shinan Toroku Koho 1996-2008 |
| Kokai Jitsuyo Shinan Koho | 1971-2008 | Toroku Jitsuyo Shinan Koho 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Katsuyoshi TANABE, "Gazo Shori Gijutsu Shukan Hyoka ni Motozuku Keijo Ruiji Shakudo o Mochiita Ruiji Gazo Kensakuho", NTT R&D, Vol.39, No.5, 10 May, 1990 (10.05.90), Vol.39, No.5, pages 697 to 708 | 1-20 |
| Y | Yasuyuki NAKAMURA, "Kukan Bunkatsu o Mochiita Shikibetsu to Hisenkei Shazo no Gakushu", Joho Shori, Vol.46, No.9, IPSJ MAGAZINE, 15 September, 2005 (15.09.05), Vol.46, No.9, pages 1030 to 1038 | 1-20 |
| Y | JP 8-123781 A (Fujitsu Ltd.), 17 May, 1996 (17.05.96), Par. Nos. [0009] to [0011] & US 5796632 A1 | 11-16,19 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04 November, 2008 (04.11.08) | 18 November, 2008 (18.11.08) |

| Name and mailing address of the ISA/<br>Japanese Patent Office | Authorized officer |
|---|---|
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007066286 W

### Non-patent literature cited in the description

- **Tomohisa Nagamatsu et al.** Antitumor activity molecular design of flavin and 5-deazaflavin analogs and auto dock study of PTK inhibitors. *Proceedings of the 25th Medicinal Chemistry Symposium,* 2006, vol. 1P-20, 82-83

- **Akiko Baba et al.** Structure-activity relationships for the electrophilic reactivities of 1-β-O-Acryl glucuronides. *Proceedings of the 34th Structure-Activity Relationships Symposium,* 2006, vol. KP20, 123-126